# EUROPEAN PATENT APPLICATION

(11) **EP 4 503 575 A1**
(43) Date of publication of application: **05.02.2025**
(21) Application number: 23778218.0
(22) Date of filing: 28.03.2023
(51) Int. Cl.: H04L 65/80, H04W 24/02

(54) **INFORMATION TRANSMISSION METHOD AND APPARATUS, RELATED DEVICE AND STORAGE MEDIUM**

(30) Priority: 29.03.2022 CN 202210323971
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WANG, Dan, Beijing 100032 (CN); LI, Yongjing, Beijing 100032 (CN); LIU, Tangqing, Beijing 100032 (CN)
(74) Representative: Maiwald GmbH
(86) International application number: PCT/CN2023/084403
(87) International publication number: WO 2023/185853

(57) **Abstract**

The present disclosure provides an information transmission method and apparatus, a first function, a third function, a fourth function and a storage medium. The method comprises: a first function obtains first information comprising at least one of an identifier of a packet set and a quality of service (QoS) demand, and second information representing an association relationship of the packet set.

## Description

### CROSS-REFERENCE TO RELATED APPLICATION

This application claims priority to and benefits of Chinese Patent Application No. 202210323971.4, filed on March 29, 2022, the entire content of which is incorporated herein by reference.

### TECHNICAL FIELD

The disclosure relates to the field of communication, and more particularly, to an information transmission method, an information transmission apparatus, a related device, and a storage medium.

### BACKGROUND

In related art, for a multimedia service, quality of service (QoS) guarantee is usually performed at a service flow granularity.

However, in some scenarios, the QoS guarantee at the service flow granularity may be unable to meet users' QoS requirements, or may cause a waste of resources.

### SUMMARY

To solve the related technical problems, embodiments of the present disclosure provide an information transmission method, an information transmission apparatus, a related device, and a storage medium.

The technical solution of embodiments of the present disclosure is implemented as follows.

Embodiments of the present disclosure provide an information transmission method, including:
obtaining first information by a first function, in which the first information includes at least one of:
an identifier of a packet set;
a quality of service (QoS) requirement; or
second information, in which the second information represents an association relationship of the packet set.

In the above solution, the second information includes at least one of:
the association relationship of the packet set; or
an identifier of the association relationship of the packet set.

In the above solution, obtaining the first information by the first function includes:
obtaining the first information from a second function by the first function.

In the above solution, the method further includes:
determining a network policy of the packet set based on the first information by the first function.

In the above solution, the network policy of the packet set includes at least one of:
a QoS policy of the packet set; or
discarding a specified packet set based on the association relationship of the packet set.

In the above solution, the QoS policy of the packet set includes at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

In the above solution, the method further includes:
sending the network policy of the packet set to a third function by the first function.

Embodiments of the present disclosure provide an information transmission method, including:
receiving a network policy of a packet set from a first function by a third function.

In the above solution, the network policy of the packet set includes at least one of:
a QoS policy of the packet set; or
discarding a specified packet set based on an association relationship of the packet set.

In the above solution, the QoS policy of the packet set includes at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

In the above solution, the method further includes:
sending the network policy of the packet set to a fourth function by the third function.

In the above solution, the fourth function includes at least one of:
a radio access network (RAN);
a user plane function (UPF); or
a base station.

In the above solution, the method further includes:
sending third information to a terminal by the third function, in which the third information includes at least one of:
a QoS policy of the packet set;
an identifier of the packet set; or
second information, in which the second information represents an association relationship of the packet set.

In the above solution, the second information includes at least one of:
the association relationship of the packet set; or
an identifier of the association relationship of the packet set.

Embodiments of the present disclosure provide an information transmission method, including:
receiving a network policy of a packet set from a third function by a fourth function; and
processing a service flow according to the network policy of the packet set by the fourth function.

In the above solution, the network policy of the packet set includes at least one of:
a QoS policy of the packet set; or
discarding a specified packet set based on an association relationship of the packet set.

In the above solution, the QoS policy of the packet set includes at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

In the above solution, the fourth function includes at least one of:
a radio access network (RAN);
a user plane function (UPF); or
a base station.

In the above solution, processing the service flow according to the network policy of the packet set by the fourth function including:
obtaining a data packet of the service flow, in which the data packet includes an identifier of the packet set and/or an identifier of an association relationship of the packet set;
performing at least one of following processing on the data packet based on the identifier of the packet set and/or the identifier of the association relationship of the packet set, and the network policy of the packet set;
QoS guarantee;
priority guarantee;
processing of packet sets having the association relationship.

In the above solution, the identifier of the packet set and/or the identifier of the association relationship of the packet set is set in a header of the data packet.

Embodiments of the present disclosure provides an information transmission apparatus, which is configured in a first function and includes:
an obtaining unit, configured to obtain first information, in which the first information includes at least one of:
an identifier of a packet set;
a quality of service (QoS) requirement; or
second information, in which the second information represents an association relationship of the packet set.

Embodiments of the present disclosure provide an information transmission apparatus, which is configured in a third function and includes:
a first receiving unit, configured to receive a network policy of a packet set sent by a first function.

Embodiments of the present disclosure provide an information transmission apparatus, which is configured in a fourth function and includes:
a second receiving unit, configured to receive a network policy of a packet set sent by a third function; and
a first processing unit, configured to process a service flow according to the network policy of the packet set.

Embodiments of the present disclosure provide a first function, including: a first communication interface and a first processor.

The first processor is configured to obtain first information through the first communication interface, in which, the first information includes at least one of:
an identifier of a packet set;
a quality of service (QoS) requirement; or
second information, in which the second information represents an association relationship of the packet set.

Embodiments of the present disclosure provide a third function, including: a second communication interface and a second processor.

The second communication interface is configured to receive a network policy of a packet set sent by a first functions.

Embodiments of the present disclosure provide a fourth function, including: a third communication interface and a third processor.

The third communication interface is configured to receive a network policy of a packet set sent by a third function.

The third processor is configured to process a service flow according to the network policy of the packet set.

Embodiments of the present disclosure provide a first function, including: a first processor and a first memory for storing a computer program capable of running on the first processor.

The first processor is configured to perform the steps of the method on the first function side in any embodiment when running the computer program.

Embodiments of the present disclosure provide a third function, including: a second processor and a second memory for storing a computer program capable of running on the second processor.

The second processor is configured to perform the steps of the method on the third function side in any embodiment when running the computer program.

Embodiment of the present disclosure provide a fourth function, including: a third processor and a third memory for storing a computer program capable of running on the third processor.

The third processor is configured to perform the steps of the method on the fourth function side in any embodiment when running the computer program.

Embodiments of the present disclosure provide a storage medium on which a computer program is stored. When the computer program is executed by a processor, the steps of the method on the first function side in any embodiment are implemented, or steps of the method on the third function side in any embodiment is implemented, or steps of the method on the fourth function side in any embodiment is implemented.

In the information transmission method and apparatus, the related devices and the storage medium provided by the embodiments of the present disclosure, the first function obtains the first information, and the first information includes at least one of: the identifier of packet set; the QoS requirement; or the second information. The second information represents the association relationship of the packet set. With the solution provided by the embodiments of the present disclosure, data packets can be classified according to importance of frames of a service flow based on the first information including at least one of the identifier of the packet set, the QoS requirement and the second information representing the association relationship of the packet set, and QoS guarantee is performed at a packet set granularity. That is, the service flow is divided into multiple types of packet sets, so that the QoS guarantee at the packet set granularity can be implemented for a multimedia service. In other words, fine-grained QoS guarantee can be realized, users' QoS demands can be met, and/or resources can be saved.

### BRIEF DESCRIPTION OF THE DRAWINGS

FIG. 1 is a schematic diagram of video frames in a video flow in the related art.
FIG. 2 is a flow chart of an information transmission method according to an embodiment of the present disclosure.
FIG. 3 is a flow chart of another information transmission method according to an embodiment of the present disclosure.
FIG. 4 is a flowchart of a third information transmission method according to an embodiment of the present disclosure.
FIG. 5 is a schematic diagram of a message format of Internet Protocol Version 6 (IPv6) according to an embodiment of the present disclosure.
FIG. 6 is a schematic diagram of a message format of IPv6 forwarding plane-based segment routing (Segment Routing IPv6, SRv6) according to an embodiment of the present disclosure.
FIG. 7 is a schematic diagram of a message format for a General Packet Radio Service (GPRS) Tunneling Protocol for the user plane (GTP-U) according to an embodiment of the present disclosure.
FIG. 8 is a schematic diagram of the division of a protocol data unit (PDU) set (also called a PDU group, which can be expressed as a PDU set) according to an embodiment of the present disclosure.
FIG. 9 is a flow chart of QoS guarantee according to an embodiment of the present disclosure.
FIG. 10 is a schematic diagram of an information transmission apparatus according to an embodiment of the present disclosure.
FIG. 11 is a schematic diagram of another information transmission apparatus according to an embodiment of the present disclosure.
FIG. 12 is a schematic diagram of a third information transmission apparatus according to an embodiment of the present disclosure.
FIG. 13 is a schematic diagram of a first function according to an embodiment of the present disclosure.
FIG. 14 is a schematic diagram of a third function of according to an embodiment of the present disclosure.
FIG. 15 is a schematic diagram of a fourth function of according to an embodiment of the present disclosure.
FIG. 16 is a schematic diagram of an information transmission system according to an embodiment of the present disclosure.

### DETAILED DESCRIPTION

The present disclosure will be described in detail below with reference to the accompanying drawings and embodiments.

First, problems existing in quality of service (QoS) guarantee at a service flow granularity in the related art are described with reference to an exemplary application scenario in which a multimedia service restore pictures on a terminal side.

In the multimedia service, there is an association relationship between packets of a media flow (which may also be called a service flow) usually. For example, when the multimedia service restores pictures on the terminal side, a typical decoding method is to simultaneously decode I-frames (which can also be called intra-frame coded frames, intra coded frames, key frames, etc., and can be expressed as Intra frames, abbreviated as I-frames), adjacent B-frames (also called bi-directional predicted interpolated coding frames, bi-directional interpolated frames, bi-directional reference frames, etc., which can be expressed as bi-directional interpolated prediction frames) and P-frames (also called forward predictive coded frames, forward predicted frames, forward reference frames, etc. (which can be expressed as Predictive-frame, abbreviated as P-frame) to restore a complete picture.

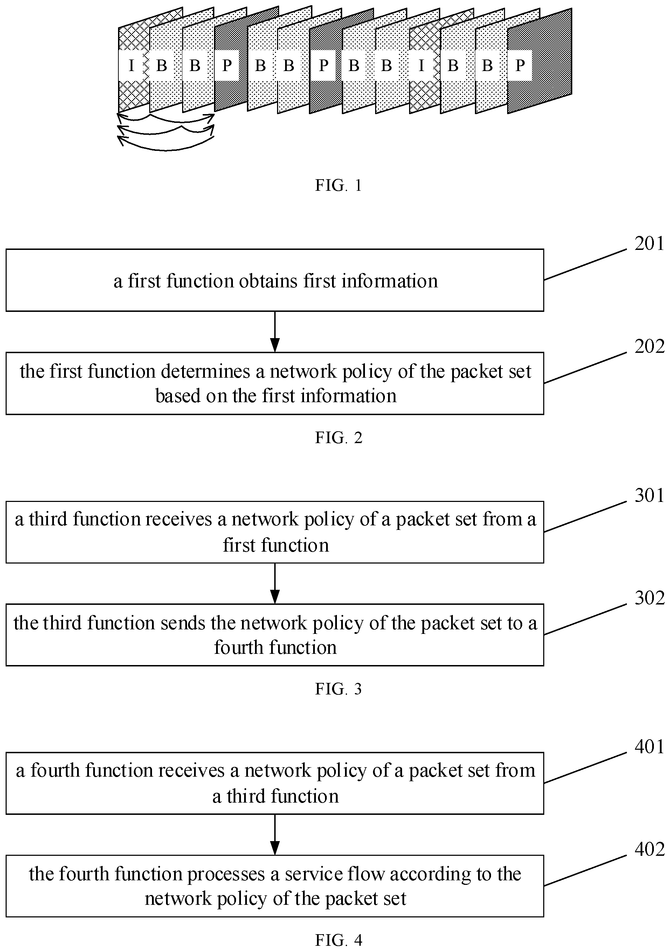

As shown in FIG. 1, a video (i.e., a video flow) consists of a series of consecutive video frames (i.e., pictures), that is, a video includes multiple groups of pictures (GoP), and each GoP includes a group of consecutive video frames, the first frame in each GoP is an I-frame, and subsequent frames can be P-frames or B-frames. Each video flow can use different coding-encoding mechanisms (such as H.264/H.265/H.266, AV1 (a video coding standard) or Audio Video coding Standards (AVS) to encode and/or compress pictures for efficient storage and transmission. During encoding, video spatial and temporal redundancy can be used, such as for inter-frame/intra-frame prediction, motion estimation/compensation, etc. Typically, during encoding, three main frame types can be used, namely the I-frame, the P-frame and the B-frame. The I-frame is an intra-frame coded picture and is a complete picture (such as a Joint Photographic Experts Group (JPEG)-format image file), which can be independently encoded and decoded. The P-frame, as a predicted picture, is not a complete frame, and only contains image changes compared with a previous frame. If a reference frame (i.e. the previous frame) is lost, the P-frame cannot be decoded and displayed. The B-frame, as a bidirectional predicted picture, contains changes with previous and following reference frames. The more the reference frames there are, the higher the compression rate is. The B-frame can only be decoded when the previous and following reference frames are available.

It can be seen from the above description that importance priorities of the I-frame, P-frame and B-frame are different. The importance priority of the I-frame is higher than that of the B-frame, and the importance priority of the B-frame is higher than that of the P-frame. Accordingly, the I-frame, the P-frame and the B-frame may correspond to different QoS requirements. When performing QoS guarantee at the service flow granularity, in a case where the service flow has a lower QoS requirement and there are data packets (such as I-frame data packets, or I-frame and B-frame data packets) having a higher QoS requirement in the service flow, using the lower QoS requirement corresponding to the service flow may not guarantee the transmission, encoding or decoding of data packets with a higher QoS requirement, thereby failing to meet the user's QoS requirement. In a case where the service flow has a higher QoS requirement and there are data packets (such as P-frame data packets, or P- frame and B-frame data packets) having a lower QoS requirement in the flow, using the higher QoS requirement corresponding to the service flow to guarantee the transmission, encoding or decoding of the data packets with the lower QoS requirements may cause a waste of resources. Therefore, a more fine-grained packet/frame-based QoS guarantee mechanism may be introduced.

In addition, when implementing QoS guarantee at the service flow granularity, network elements cannot perceive the association between the data packets, such as the association between I-frame data packets, P-frame data packets and B-frame data packets. When there is a data packet lost, a data packet associated with the lost data packet may be unable to be parsed. For example, when the I-frame is lost, the B-frame and P frame in the same GoP may be unable to be parsed. In this case, the network elements may still transmit these data packets associated with the lost data packet, which may cause a waste of resources.

Based on this, in various embodiments of the present disclosure, based on first information including at least one of: an identifier of a packet set, a QoS requirement, or second information representing an association relationship of the packet set, it is possible to classify data packets according to importance of frames of a service flow, and QoS guarantee can be performed at a packet set granularity. That is, the service flow is divided into multiple types of packet sets, so that QoS guarantee at the packet set granularity can be implemented for the multimedia service. In other words, fine-grained QoS guarantee can be realized, users' QoS demands can be met, and/or resources can be saved.

In addition, based on the first information, a network function entity can perceive the association relationship between the packet sets, so that when a data packet is lost, it can select to discard a data packet associated with the lost data packet according to the association relationship between the packet sets, which can save resources.

Embodiments of the present disclosure provide an information transmission method performed by a first function. As shown in FIG. 2, the method includes following steps.

**In** step 201, the first function obtains first information.

The first information includes at least one of the following:
an identifier of a packet set, such as an **ID** (Identifier);
a QoS requirement;
second information representing an association relationship of the packet set, which can be expressed as an association.

**In** actual application, the first function may include a policy control function (PCF), etc. Embodiments of the present disclosure do not limit this as long as its function is implemented.

**In** actual application, the packet set may also be called a data packet group, a data packet set or a protocol data unit (PDU) set, etc. Embodiments of the present disclosure do not limit the name as long as its function is implemented.

An identifier of a packet set is used to represent that, packets belonging to the packet set have the same priority requirement and can be decoded together on a terminal side.

**In** actual application, the identifier of the packet set can not only reflect (also be called represent) a type of the packet set, i.e., a corresponding type of data packet, it can also reflect (also be called represent) an importance priority of the packet set. The type of the identifier of the packet set can be set according to requirements, and this is not limited in embodiments of the disclosure. For example, for a multimedia service flow, the service flow can be classified into multiple types of packet sets as needed. For example, an I-frame is classified into one type of packet set, whose importance priority is highest. A B-frame is classified into one type of packet set, whose important priority is secondarily high. A P-frame is classified into one type of packet set, whose importance priority is lowest. Embodiments of the present disclosure do not limit the specific implementation of how to classify the packet sets. For example, the first information includes an identifier "1" of the I-frame packet set, an identifier "2" of the B-frame packet set, and an identifier "3" of the P-frame packet set. The identifiers of these packet sets imply that an importance priority of the I-frame packet set is the highest, an importance priority of the B-frame packet set is secondarily high, and an importance priority of the P-frame packet set is the lowest.

**In** actual application, the association relationship of the packet set may be represented by an identifier (such as an ID).

Based on this, in an embodiment, the second information may include at least one of the following:
the association relationship of the packet set; or
an identifier of the association relationship of the packet set.

An identifier of an association relationship of a packet set is used to identify that therein an association relationship between certain packet sets. For example, referring to the above example, for the B-frame packet set or the P-frame packet set, when the identifier of the association relationship of the packet set is "1", it means that there is an association relationship between the B-frame packet set or the P-frame packet set and the I-frame packet set. In actual application, a specific method of representing the association relationship of the packet set through the identifier can be set according to requirements, which is not limited in embodiments of the present disclosure.

In step 201, in actual application, the first function may obtain the first information from other functions except the first function.

Based on this, in an embodiment, an implementation of step 201 may include the following.

The first function obtains the first information from a second function.

In actual application, the second function may include an application function (AF), etc. This is not limited in embodiments of the present disclosure, as long as its function is realized.

In actual application, before step 201, the second function may determine the first information.

The second function can divide each service flow into multiple packet sets according to actual scenarios and service requirements, and determine (i.e., generate) an identifier of each packet set, a QoS requirement corresponding to each packet set, and an association relationship between the packet sets. That is, the first information is determined. For example, if the I-frame is used as an observation point, the packet set may include data packets of the I-frame, if the B-frame is used as an observation point, the packet set may include data packets of the I-frame and data packets of the B-frame, or may include data packets of the B-frame only. A way in which the second function divides the packet sets and a way of generating the identifiers of the packet sets and/or the identifiers of the association relationships of the packet sets can be set according to requirements, and this is not limited in the embodiments of the present disclosure.

In actual application, after the first function obtains the first information, a network policy of the packet set can be determined based on the first information.

Based on this, in an embodiment, as shown in FIG. 2, the method may further include following step.

In step 202, the first function determines a network policy of the packet set based on the first information.

The network policy of the packet set may include at least one of the following:
a QoS policy of the packet set; or
discarding a specified packet set based on the association relationship of the packet set.

In actual application, the QoS policy of the packet set may include a processing priority of the packet set, i.e., an importance priority of the packet set. For example, the identifier of the packet set may reflect the importance priority of the packet set, thus, the QoS policy of the packet set may imply the identifier of the packet set.

In actual application, according to the importance priority of the packet set, the QoS guarantee of the packet set with high importance priority can be given priority. For example, in a QoS policy of a packet set, the I frame packet set has the highest importance priority, the B frame packet set has the secondary high importance priority, and the P frame packet set has the lowest importance priority, thus, the resources of the I-frame packet set may be guaranteed first in the case of resource shortage.

In actual application, in the case where the first function includes a PCF, the QoS policy of the packet set may include a policy control and charging rule (PCC Rule). The PCF can convert the QoS requirement corresponding to each packet set into a PCC Rule with a QoS parameter based on the first information, and obtain the PCC Rule corresponding to each packet set, which can also be understood as a PCC Rule at the packet set granularity, which can be expressed as PCC rule/per PDU set).

In an embodiment, the QoS policy of the packet set may include at least one of the following:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

In actual application, discarding a specified packet set based on the association relationship of the packet set can be understood as, for service flow data, when a packet set with a high importance priority is lost, one or more packet sets associated with the lost packet set can be determined based on the association relationship of the lost packet set, the one or more packet sets associated with the lost packet set may be selected to discard to save resources. For example, referring to the above example, when a certain I-frame packet set is lost, the B-frame packet set or P-frame packet set associated with the I-frame packet set can be discarded. In addition, it can be understood that, the specified packet set may be discarded according to the association relationship of the packet set, therefore, the network policy of the packet set may imply the second information.

In actual application, after determining the network policy of the packet set, the first function may send the network policy of the packet set to other functions except the first function and the second function, for other functions to perform the QoS guarantee at the packet set granularity based on the network policy of the packet set.

Based on this, in an embodiment, the method may further include following step.

The first function sends the network policy of the packet set to a third function.

In actual application, the third function may include a session management function (SMF), etc. Embodiments of the present disclosure do not limit this as long as its function is implemented.

Correspondingly, embodiments of the present disclosure also provide an information transmission method, which is performed by a third function. As shown in FIG. 3, the method includes following steps.

In step 301, the third function receives a network policy of a packet set sent by a first function.

It should be noted that the specific content included in the network policy of the packet set has been described in detail above and will not be described again here.

In actual application, after receiving the network policy of the packet set, the third function may send the network policy of the packet set to other network functions except the first function, the second function and the third function, for other network functions to implement QoS guarantee at a packet set granularity.

Based on this, in an embodiment, as shown in FIG. 3, the method may further include following steps.

In step 302, the third function sends the network policy of the packet set to a fourth function.

In which, the fourth function may include at least one of the following:
a radio access network (RAN);
a user plane function (UPF); or
a base station.

In actual application, the third function may perform format conversion when transmitting the network policy of the packet set. For example, in the network policy of the packet set sent by the first function to the third function, the QoS policy of the packet set may include a PCC Rule corresponding to each packet set. After receiving the network policy of the packet set, the third function may generate a QoS template (profile) corresponding to each PCC Rule, i.e., a QoS profile corresponding to each packet set, which can also be understood as a QoS profile at a packet set granularity (QoS profile/per PDU set). In other words, in the network policy of the packet set sent by the third function to the fourth function, the QoS policy of the packet set may include the QoS profile corresponding to each packet set. That is, when the third function transmits the network policy of the packet set, a conversion from a PCC Rule to a QoS profile is performed for the QoS policy of the packet set.

In actual application, the third function may directly send the network policy of the packet set to the fourth function, or may send the network policy of the packet set to the fourth function through network functions other than the first function, the second function, the third function and the fourth function. For example, the first function may send the network policy of the packet set to the fourth function through an access and mobility management function (AMF), which is not limited in embodiments of the present disclosure.

In actual application, in order to implement processing related to QoS guarantee at the packet set granularity on the terminal side, the third function may send relevant information for realizing the QoS guarantee at the packet set granularity to the terminal.

Based on this, in an embodiment, the method may further include following steps.

The third function sends third information to a terminal, and the third information includes at least one of the following:
a QoS policy of the packet set;
an identifier of the packet set; or
second information, in which the second information represents an association relationship of the packet set.

It should be noted that the specific content contained in the second information has been described in detail above and will not be described again here.

In addition, it should be noted that the QoS policy of the packet set sent to the fourth function and the QoS policy of the packet set sent to the terminal are QoS policies that the fourth function and the terminal need to use, respectively. That is, the policies used by the fourth function and the terminal to process service flow data packets. Through processing respectively performed by the fourth function and the terminal using their respective QoS policies, the QoS guarantee at the packet set granularity can be achieved.

In actual application, the terminal may also be called user equipment (UE) or a user.

In actual application, the third function may send the third information to the terminal through at least one of network functions such as an AMF, an RAN, or base station. That is, the third function may indirectly send the third information to the terminal. Embodiments of the present disclosure does not limit this.

In actual application, after receiving the network policy of the packet set, the fourth function can process a service flow according to the network policy of the packet set to achieve the QoS guarantee at the packet set granularity.

Correspondingly, embodiments of the present disclosure also provide an information processing method performed by a fourth function. As shown in FIG. 4, the method includes following steps.

In step 401, the fourth function receives a network policy of a packet set sent by a third function.

In step 402, the fourth function processes a service flow according to the network policy of the packet set.

It should be noted that the specific contents of the fourth function and the network policy of the packet set have been described in detail above, and will not be described again here.

In an embodiment, step 402 may include:
obtaining a data packet of the service flow, in which the data packet includes an identifier of the packet set and/or an identifier of an association relationship of the packet set;
performing at least one of following processing on the data packet based on the identifier of the packet set and/or the identifier of the association relationship of the packet set, and the network policy of the packet set:
QoS guarantee;
priority guarantee;
processing of packet sets having the association relationship.

In actual application, in a case where the data packet contains the identifier of the packet set, the fourth function can use the identifier of the packet set to search for a QoS policy of the packet set corresponding to the data packet from the network policy of the packet set, and perform the QoS guarantee and the priority guarantee on the data packet according to the found QoS policy. For example, referring to the above example, the service flow includes I-frame data packets, B-frame data packets and P-frame data packets. An identifier of the I-frame packet set is "1", an identifier of the B-frame packet set is "2", and an identifier of the P-frame packet set is "3". The identifiers of these packet sets imply that the I-frame packet set has the highest importance priority, B-frame packet set has the secondary high importance priority, and the P-frame packet set has the lowest importance priority. For the obtained data packet of the service flow, the fourth function can search a QoS policy (such as 5QI) of the packet set corresponding to the data packet in the network policy of the packet set according to the identifier (1/2/3) of the packet set in the data packet, and perform QoS guarantee and priority guarantee on the data packet according to the found QoS policy, so that the QoS of the I-frame data packet is higher than the QoS of the B-frame data packet, and the QoS of the B-frame data packet is higher than the QoS of the P-frame data packet.

In actual application, performing the processing of packet sets having the association relationship on the data packet may include: when it is determined that there is a lost data packet in the service flow, discarding a packet set associated with the lost data packet according to the association relationship between the packet sets. For example, referring to the above example, the network policy of the packet set includes an association relationship between the B-frame packet set, the P-frame packet set, and the I-frame packet set. When the fourth function determines that the I-frame packet set in the service flow is lost, the B-frame packet set and the P-frame packet set can be discarded according to the association relationship between the I-frame packet set, the B-frame packet set and the P-frame packet set.

For example, the second function (that is, the AF) can send some characteristics of the packet sets, such as a traffic pattern (traffic pattern), to a network (such as a network element of the 5G system, such as the first function). This information represents how the packet set is composed (such as how many packets usually form a packet set, or packets with the sequence number of N-N+X (i.e., N to N+X) form a packet set, or packets with the sequence number N-N+X is the I-frame set, where N and X are integers greater than zero, and the value of N or X can be determined as needed) and other information. The above information can be transmitted to the fourth function. The fourth function can determine which packet sets are lost based on the sequence number of the packet set. Based on the lost packet set and the traffic pattern of the packet set given by a control plane, the fourth function can determine which packets are associated and identify an association ID (that is, the identifier of the association relationship of the packet set), then the fourth function finds all the associated packets and discards them. The embodiments of this disclosure do not limit the specific implementation of how to determine the lost packet set and how to determine the associated packets.

In practical application, in order to improve the data processing efficiency of the QoS guarantee at the packet set granularity, the identifier of the packet set and/or the identifier of the association relationship of the packet set can be configured in a header of a data packet of the service flow. For example, for an IPv6 data packet, an extension header can be added after the basic header of the data packet to configure the identifier of the packet set and/or the identifier of the association relationship of the packet set. For an SRv6 data packet, the identifier of the packet set and/or the identifier of the association relationship of the packet set can be configured in an optional parameter field (Arguments) in a function field (function) in a fine-sorted identifier (segment ID) of an extension header field (Segment Routing Header, SRH). For a GTP-U data packet, the identifier of the packet set and/or the identifier of the association relationship of the packet set can be configured in a GTP header.

By configuring the identifier of the packet set and/or the identifier of the association relationship of the packet set in the header of the data packet, the identifier of the packet set and/or the identifier of the association relationship of the packet set contained in the data packet can be quickly determined without performing deep packet inspection (DPI) on the data packet. Thus, the QoS guarantee can be quickly realized, thereby improving the data processing efficiency of the QoS guarantee at the packet set granularity.

In actual application, when the fourth function processes the service flow according to the network policy of the packet set, a packet detection rule (PDR) can be constructed according to the network policy of the packet set, and filters uplink and downlink data packets according to the constructed PDR, so as to quickly identify the network policy of the packet set corresponding to the identifier of the packet set and/or the identifier of the association relationship of the packet set, thereby improving the data processing efficiency of the QoS guarantee at the packet set granularity.

In the information transmission method provided by the embodiments of the present disclosure, the first function obtains the first information, and the first information includes at least one of: an identifier of a packet set; a QoS requirement; and second information, where the second information represents an association relationship of the packet set. With the solution provided by embodiments of the present disclosure, data packets can be classified according to importance of frames of a service flow based on the first information including at least one of the identifier of the packet set, the QoS requirement and the second information representing the association relationship of the packet set, and QoS guarantee is performed at the packet set granularity. That is, the service flow is divided into multiple types of packet sets, so that the QoS guarantee at the packet set granularity can be implemented for a multimedia service. In other words, fine-grained QoS guarantee can be realized, users' QoS demands can be met, and/or resources can be saved.

In addition, based on the first information, a network function entity can perceive the association relationship between the packet sets, so that when a data packet is lost, it can select to discard the data packet associated with the lost data packet according to the association relationship between the packet sets, which can save resources.

The present disclosure will be described in further detail below in conjunction with application examples.

In this application embodiment, in order to achieve QoS guarantee at a granularity of PDU set (i.e., the above-mentioned packet set), an enhanced identifier may be used when an application on an application server and a terminal generates a data packet (i.e., a media flow packet). That is, at least one of the following identifiers is added in the packet header:
1) a PDU set identifier (such as a PDU set ID, i.e., the identifier of the above-mentioned packet set), used to indicate that these packets belong to one PDU set and have the same QoS importance priority requirement. That is, they can reflect the priority of the QoS guarantee and can be decoded together on the terminal side;
2) an association identifier (such as an Association ID, i.e., the identifier of the above-mentioned association relationship of the packet set), used to indicate that there is an association relationship between some PDU sets, i.e., indicating which PDU sets a packet is associated with. For example, the I-frame is associated with adjacent B-frames and P-frames. When an RAN finds that the I-frame is lost, the adjacent B-frames and P-frames can be found based on the Association ID. These B-frames and P-frames cannot be parsed even if they are transmitted to the opposite end, thus, the adjacent B-frames/P-frames may be discarded.

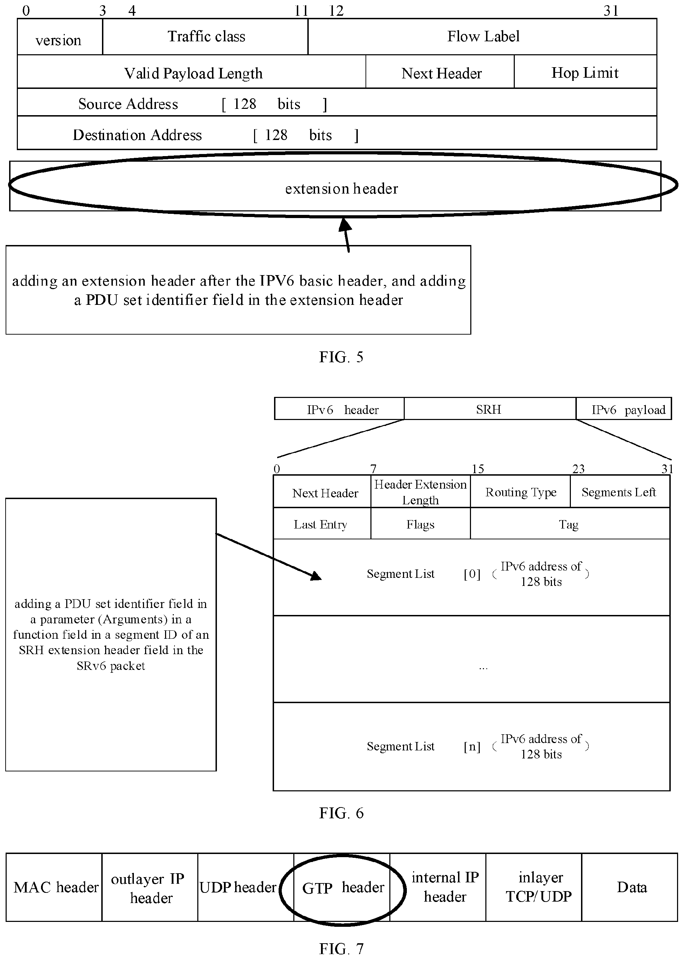

For example, for an IPv6 data packet, as shown in FIG. 5, an extension header can be added after the IPV6 basic header, and a PDU set identifier field can be set in the extension header. For an SRv6 data packets, as shown in FIG. 6, a PDU set identifier field can be added in a parameter (Arguments) in a function field in a segment ID of an SRH extension header field in the SRv6 packet. For a GTP-U data packet, as shown in FIG. 7, a PDU set identifier field can be added to the GTP header.

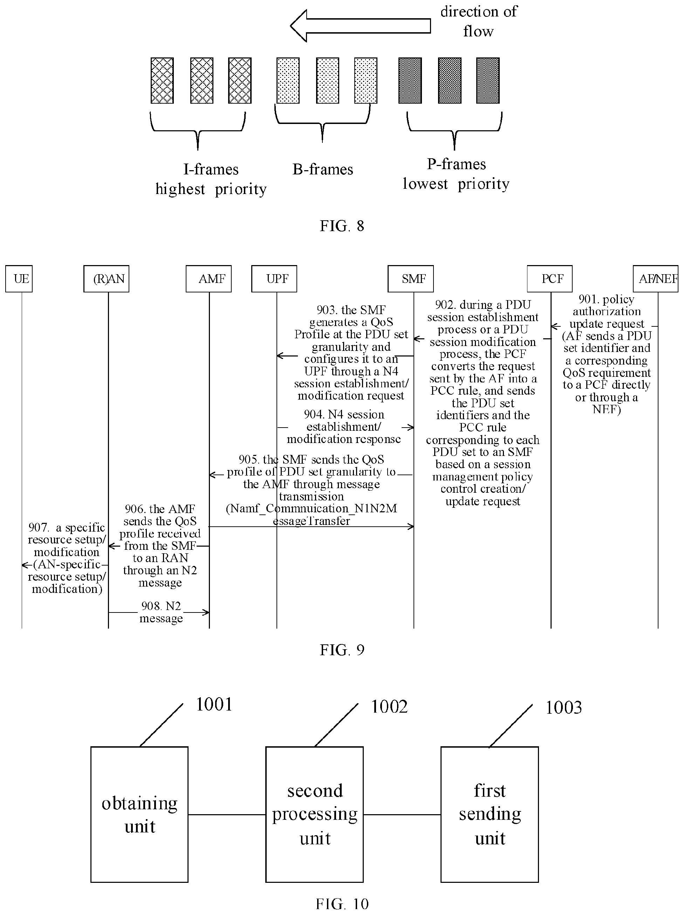

In embodiments of the disclosure, QoS guarantee at a PDU set granularity can be achieved through the following steps.
1) An AF (i.e., the above-mentioned second function) divides each service flow into multiple PDU sets according to an actual scenario and a service requirement, each PDU set is identified (i.e., adding a PDU set ID). An Association ID is added to represent an association relationship between the PDU sets (i.e., the above-mentioned second information). A QoS requirement is provided for each PDU set (i.e., the above-mentioned QoS requirement). The obtained information (i.e., the above-mentioned first information) is sent to a PCF (i.e., the first function mentioned above) through an application function request (i.e., an AF request).
   For example, with I-frames as an observation point, a PDU set may include I-frames; with B-frames as an observation point, a PDU set may include I-frames and B-frames, or only B-frames, etc. As shown in FIG. 8, the service flow can be divided into a PDU set containing I-frames, a PDU set containing B-frames, and a PDU set containing P-frames. The PDU set containing the I-frames has the highest QoS importance priority. The PDU set containing the P-frames has the lowest QoS importance priority.
2) Based on the request sent by the AF, the PCF converts the QoS requirement corresponding to each PDU set into a PCC rule with a QoS parameter, to obtain the PCC rule (PCC rule/per PDU set) of each PDU set, and the PCC rules, the PDU set ID, the Association ID and other information (i.e., the above-mentioned network policy of the packet set) are reported to an SMF (i.e., the above-mentioned third function).
3) The SMF generates a QoS profile (QoS profile/per PDU set) corresponding to each PDU set according to the PCC rule corresponding to each PDU set, and sends the QoS profile/per PDU set (i.e., the above network policy of the packet set) to a UPF (i.e., the above-mentioned fourth function), and the QoS profile/per PDU set is sent to an RAN through the AMF (i.e., the above-mentioned fourth function).
4) When a UE sends an uplink data packet to make a service request, the RAN and the UPF can parse the UE's data packet, to obtain the PDU set ID and Association ID in the data packet, and perform the following processing:
   a) performing QoS guarantee of data packets according to the QoS profile corresponding to the PDU set ID;
   b) for PDU sets with an association relationship, when the RAN or UPF finds that an important message (such as the I frame) in this association relationship is lost, the RAN or UPF discard non-important messages (such as the B-frames, P-frames, etc.) in the association relationship.

In this application embodiment, as shown in FIG. 9, the QoS guarantee at the PDU set granularity can be implemented through the following steps.

In step 901, based on a policy authorization update request (Npcf_PolicyAuthorization_Update request), an AF sends a PDU set identifier and a corresponding QoS requirement to a PCF directly or through a Network Exposure Function (NEF), and then step 902 is performed.

The Npcf_PolicyAuthorization_Update request carries the above-mentioned first information (i.e., the PDU set identifier and the corresponding QoS requirement).

In step 902, during a PDU session establishment process or a PDU session modification process, the PCF converts the request sent by the AF into a PCC rule, and sends the PDU set identifiers and the PCC rule corresponding to each PDU set to an SMF based on a session management policy control creation/update (Npcf_SMPolicyControl_Create/Update) request, and then step 903 is performed.

The Npcf_SMPolicyControl_Create/Update request carries the above network policy of the packet set (i.e., the PDU set identifiers and the PCC rule corresponding to each PDU set).

In step 903, the SMF generates a QoS Profile at the PDU set granularity and configures it to an UPF through a N4 session establishment/modification request (N4 Session Establishment/Modification Request), and then step 904 is performed.

The N4 Session Establishment/Modification Request carries the above network policy of the packet set (i.e., the QoS Profile at the PDU set granularity).

In step 904, the UPF returns an N4 session establishment/modification response (N4 Session Establishment/Modification Response) to the SMF, and then the step 905 is performed.

In step 905, the SMF sends the QoS profile of PDU set granularity to the AMF through message transmission (Namf_Commnuication_N1N2MessageTransfer), and then step 906 is performed.

The Namf_Commnuication_N1N2MessageTransfer carries the above network policy of the packet set (i.e., the QoS profile at the PDU set granularity).

In step 906, the AMF sends the QoS profile received from the SMF to an RAN through an N2 message, and then step 907 is performed.

The N2 message carries the above network policy of the packet set (that is, the QoS profile received by the AMF from the SMF).

In step 907, the RAN sends a specific resource setup/modification (AN-specific resource setup/modification) request to a UE, and then step 908 is performed.

In step 908, the RAN sends an N2 message to AMF.

Through steps 901 to 906, the QoS profile sending process in related art is improved. Based on the PDU set ID and the Association ID, the PCC rule/per PDU set and the QoS profile/per PDU set are added to implement the QoS guarantee of the PDU set granularity.

The UPF can construct a PDR based on the PDU set ID and Association ID received from the N4 interface, and filter uplink and downlink data packets based on the constructed PDR to identify a QoS guarantee requirement of a certain PDU set ID, and can do the following operations.
a) QoS guarantee for the data packet is performed according to the QoS profile corresponding to the PDU set ID.
b) For a PDU set with an association relationship, when the UPF finds that an important message (such as the I-frame) in this association relationship is lost, it can discard non-important messages (such as the B-frames, the P-frames) in the association relationship.

In actual application, the mechanism for the RAN to perform the QoS guarantee for the service flow is basically the same as that of UPF, and will not be described again here.

The solution provided by this application embodiment is based on the PDU set ID and the Association ID, which can realize QoS guarantee that uses PDU set as the granularity, which is more finer-grained than using the service flow granularity, thus it is conducive to the standardization of multimedia service flows in the 5G network, and can meet users' QoS requirements and/or save resources.

In order to implement the method on the first function side of the embodiments of the present disclosure, embodiments of the present disclosure also provide an information transmission device, which is provided on the first function. As shown in FIG. 10, the device includes:
an obtaining unit 1001, configured to obtain first information, in which the first information includes at least one of:
an identifier of a packet set;
a quality of service (QoS) requirement; or
second information, in which the second information represents an association relationship of the packet set.

In an embodiment, the obtaining unit 1001 is configured to obtain the first information from a second function.

In an embodiment, as shown in FIG. 10, the device further includes a second processing unit 1002, configured to determine a network policy of a packet set based on the first information.

In an embodiment, as shown in FIG. 10, the device further includes a first sending unit 1003, configured to send the network policy of the packet set to a third function.

In actual application, the obtaining unit 1001 can be implemented by a processor in the information transmission device combined with a communication interface; the first sending unit 1003 can be implemented by a communication interface in the information transmission device; and the second processing unit 1002 can be implemented by a processor in the information transmission device.

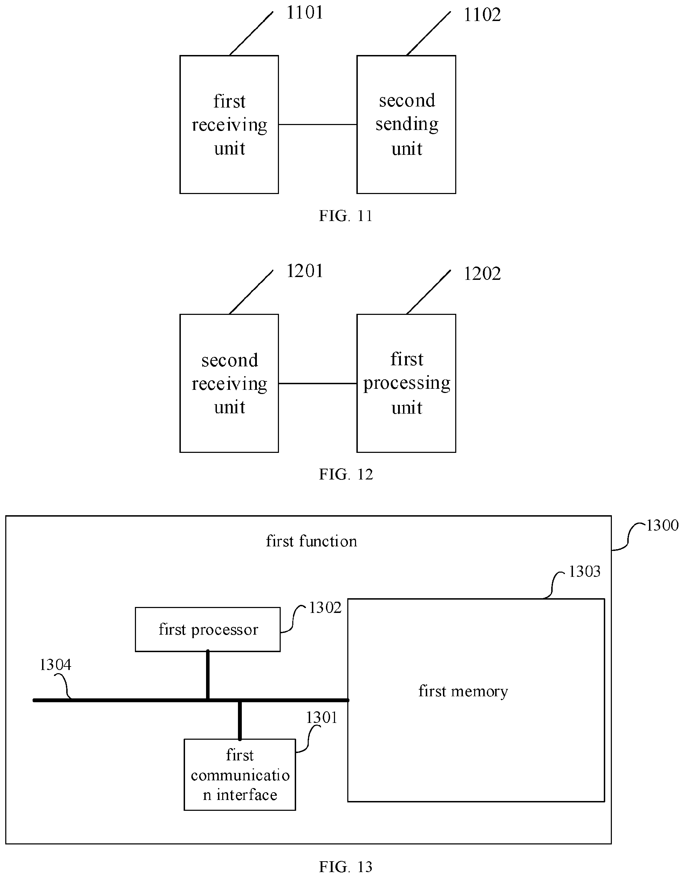

In order to implement the method on the third function side of the embodiments of the present disclosure, embodiments of the present disclosure also provide an information transmission device, which is provided on the third function. As shown in FIG. 11, the device includes:
a first receiving unit 1101, configured to receive a network policy of a packet set sent by a first function.

In an embodiment, the device further includes a second sending unit 1102, configured to send the network policy of the packet set to a fourth function.

In an embodiment, the second sending unit 1102 is also configured to send third information to the terminal. The third information includes at least one of:
a QoS policy of the packet set;
an identifier of the packet set; or
second information, in which the second information represents an association relationship of the packet set.

In practical application, the first receiving unit 1101 and the second sending unit 1102 may be implemented by a communication interface in the information transmission device.

In order to implement the method on the fourth functional side of the embodiments of the present disclosure, embodiments of the present disclosure also provide an information transmission device, which is provided on the fourth function. As shown in FIG. 12, the device includes:
a second receiving unit 1201, configured to receive a network policy of a packet set; and
a first processing unit 1202, configured to process a service flow according to the network policy of the packet set.

In an embodiment, the first processing unit 1202 is configured to:
obtain a data packet of the service flow through the second receiving unit 1201, in which the data packet includes an identifier of the packet set and/or an identifier of an association relationship of the packet set;
perform at least one of following processing on the data packet based on the identifier of the packet set and/or the identifier of the association relationship of the packet set, and the network policy of the packet set:
QoS guarantee;
priority guarantee;
processing of packet sets having the associated relationship.

**In** actual application, the second receiving unit 1201 can be implemented by a communication interface in the information transmission device; the first processing unit 1202 can be implemented by a processor in the information transmission device.

It should be noted that when the information transmission device provided in the above embodiments transmits information, only the division of the above program modules is used as an example. In practical applications, the above processing can be allocated to different program modules as needed. That is, the internal structure of the device is divided into different program modules to complete all or part of the processing described above. In addition, the information transmission device provided by the above embodiments and the information transmission method embodiments belong to the same concept, and detailed implementation process may refer to the method embodiments, which will not be described again here.

Based on the hardware implementation of the above program modules, and in order to implement the method on the first function side of the embodiments of the disclosure, embodiments of the disclosure also provides a first function. As shown in FIG. 13, the first function 1300 includes:
a first communication interface 1301 capable of performing information interaction with other functions (such as the second function, the third function) and/or a terminal;
a first processor 1302, connected to the first communication interface 1301 to implement information interaction with other functions and/or the terminal, and configured to perform the method provided by one or more technical solutions on the first function side when running a computer program. The computer program is stored on the first memory 1303.

The first processor 1302 is configured to obtain first information through the first communication interface 1301, in which the first information includes at least one of:
an identifier of a packet set;
a quality of service (QoS) requirement; or
second information, in which the second information represents an association relationship of the packet set.

**In** an embodiment, the first processor 1302 is configured to obtain the first information from the second function through the first communication interface 1301.

**In** an embodiment, the first processor 1302 is further configured to determine a network policy of a packet set based on the first information.

In an embodiment, the first communication interface 1301 is further configured to send the network policy of the packet set to the third function.

It should be noted that the specific processing procedures of the first communication interface 1301 and the first processor 1302 can be understood with reference to the above methods.

In actual application, various components in the first function 1300 are coupled together through a bus system 1304. It can be understood that the bus system 1304 is used to implement connection communication between these components. In addition to a data bus, the bus system 1304 also includes a power bus, a control bus, and a status signal bus. However, for the sake of clarity, the various buses are labeled as the bus system 1304 in FIG. 13.

The first memory 1303 in embodiments of the present disclosure is used to store various types of data to support the operation of the first function 1300. Examples of such data include: any computer program used to operate on the first function 1300.

The methods disclosed in the above embodiments of the present disclosure can be applied to the first processor 1302 or implemented by the first processor 1302. The first processor 1302 may be an integrated circuit chip with signal processing capabilities. During the implementation process, the steps of the above method may be implemented by instructions in the form of hardware integrated logic circuits or software in the first processor 1302. The above-mentioned first processor 1302 may be a general-purpose processor, a digital signal processor (DSP), or other programmable logic devices, discrete gate or transistor logic devices, discrete hardware components, etc. The first processor 1302 can implement or execute the methods, steps and logical block diagrams in the embodiments of the present disclosure. A general-purpose processor may be a microprocessor or any conventional processor, etc. The steps of the method in conjunction with the embodiments of the present disclosure can be directly implemented by a hardware decoding processor, or executed by a combination of hardware and software modules in the decoding processor. The software module may be located in a storage medium, which is located in the first memory 1303. The first processor 1302 reads the information in the first memory 1303 and performs the steps of the aforementioned method in combination with its hardware.

In an exemplary embodiment, the first function 1300 may be implemented by one or more application specific integrated circuits (ASICs), DSPs, programmable logic devices (PLDs), complex programmable logic devices (CPLD), Field-Programmable Gate Arrays (FPGAs), general-purpose processors, controllers, Micro Controller Units (MCUs), microprocessors, or others electronic components, for performing the aforementioned methods.

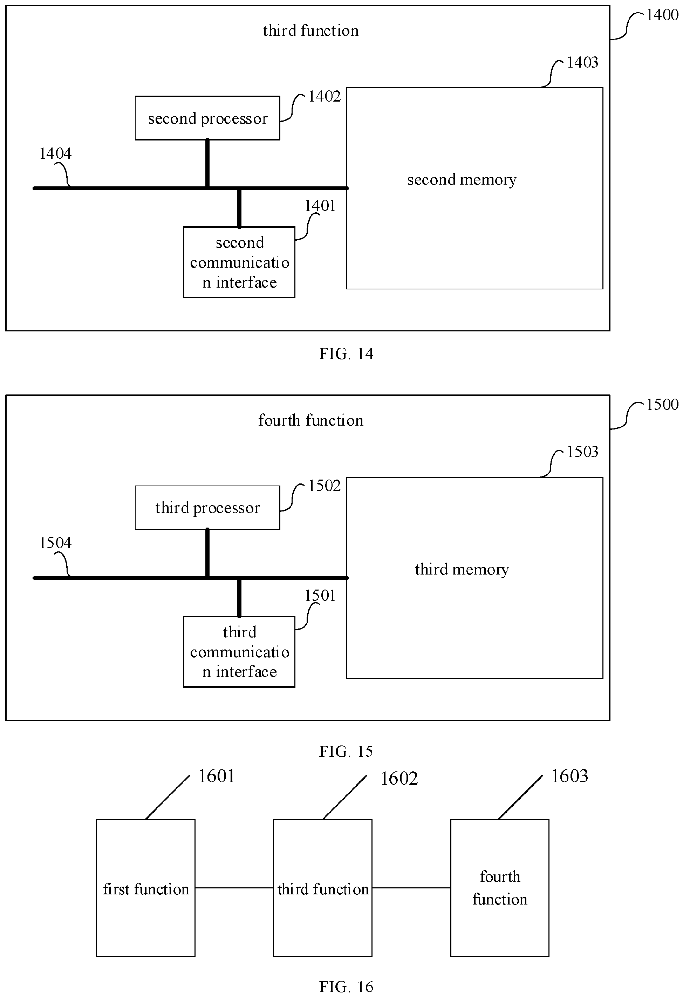

Based on the hardware implementation of the above program modules, and in order to implement the method on the third functional side of the embodiments of the disclosure, embodiments of the disclosure also provide a third function. As shown in FIG. 14, the third function 1400 includes:
a second communication interface 1401 capable of performing information interaction with other functions (such as the first function, the fourth function) and/or a terminal; and
a second processor 1402 connected to the second communication interface 1401 to implement information interaction with other functions and/or the terminal, and configured to execute the method by one or more technical solutions on the third function when running a computer program. The computer program is stored on the second memory 1403.

The second communication interface 1401 is configured to receive a network policy of a packet set sent by the first function.

In an embodiment, the second communication interface 1401 is also configured to send the network policy of the packet set to a fourth function.

In an embodiment, the second communication interface 1401 is also configured to send third information to the terminal, in which the third information includes at least one of:
a QoS policy of the packet set;
an identifier of the packet set; or
second information, in which the second information represents an association relationship of the packet set.

It should be noted that the processing process of the second communication interface 1401 can be understood with reference to the above method.

In actual application, various components in the third function 1400 are coupled together through a bus system 1404. It can be understood that the bus system 1404 is used to implement connection communication between these components. In addition to a data bus, the bus system 1404 also includes a power bus, a control bus, and a status signal bus. However, for the sake of clarity, the various buses are labeled as the bus system 1404 in FIG. 14.

The second memory 1403 in embodiments of the present disclosure is configured to store various types of data to support the operation of the third function 1400. Examples of such data include any computer program used to operate on the third function 1400.

The methods disclosed in the above embodiments of the present disclosure can be applied to the second processor 1402 or implemented by the second processor 1402. The second processor 1402 may be an integrated circuit chip with signal processing capabilities. During the implementation process, the steps of the above method can be completed by instructions in the form of hardware integrated logic circuits or software in the second processor 1402. The above-mentioned second processor 1402 may be a general processor, a DSP, or other programmable logic devices, discrete gate or transistor logic devices, discrete hardware components, etc. The second processor 1402 can implement or execute the methods, steps and logical block diagrams in the embodiments of the present disclosure. A general-purpose processor may be a microprocessor or any conventional processor, etc. The steps of the method in conjunction with the embodiments of the present disclosure can be directly implemented by a hardware decoding processor, or executed by a combination of hardware and software modules in the decoding processor. The software module may be located in a storage medium, and the storage medium is located in the second memory 1403. The second processor 1402 reads the information in the second memory 1403, and performs the steps of the foregoing method in combination with its hardware.

In an exemplary embodiment, the third function 1400 may be implemented by one or more ASICs, DSPs, PLDs, CPLDs, FPGAs, general processors, controllers, MCUs, microprocessors, or other electronic components for performing the foregoing methods.

Based on the hardware implementation of the above program modules, and in order to implement the method on the fourth functional side of the embodiments of the disclosure, embodiments of the disclosure also provide a fourth function. As shown in FIG. 15, the fourth function 1500 includes:
a third communication interface 1501 capable of performing information interaction with other functions (such as the third function) and/or a terminal; and
a third processor 1502 connected to the third communication interface 1501 to implement information interaction with other functions and/or the terminal, and configured to perform the method provided by one or more technical solutions on the fourth function side when running a computer program. The computer program is stored on the third memory 1503.

The third communication interface 1501 is configured to receive a network policy of a packet set sent by the third function;
The third processor 1502 is configured to process a service flow according to the network policy of the packet set.

In an embodiment, the third processor 1502 is configured to:
obtain a data packet of the service flow, in which the data packet includes an identifier of the packet set and/or an identifier of an association relationship of the packet set;
perform at least one of following processing on the data packet based on the identifier of the packet set and/or the identifier of the association relationship of the packet set, and the network policy of the packet set;
QoS guarantee;
priority guarantee;
processing of packet sets having the association relationship.

It should be noted that the specific processing procedures of the third communication interface 1501 and the third processor 1502 can be understood with reference to the above methods.

In actual application, various components in the fourth function 1500 are coupled together through a bus system 1504. It can be understood that the bus system 1504 is used to implement connection communication between these components. In addition to a data bus, the bus system 1504 also includes a power bus, a control bus, and a status signal bus. However, for the sake of clarity, the various buses are labeled as the bus system 1504 in FIG. 15.

The third memory 1503 in embodiments of the present disclosure is used to store various types of data to support the operation of the fourth function 1500. Examples of such data include: any computer program used to operate on the fourth function 1500.

The methods disclosed in the above embodiments of the present disclosure can be applied to the third processor 1502 or implemented by the third processor 1502. The third processor 1502 may be an integrated circuit chip with signal processing capabilities. During the implementation process, the steps of the above method may be implemented by instructions in the form of hardware integrated logic circuits or software in the third processor 1502. The above-mentioned third processor 1502 may be a general-purpose processor, a DSP, or other programmable logic devices, discrete gate or transistor logic devices, discrete hardware components, etc. The third processor 1502 can implement or execute the methods, steps and logical block diagrams in the embodiments of the present disclosure. A general-purpose processor may be a microprocessor or any conventional processor, etc. The steps of the method in conjunction with the embodiments of the present disclosure can be directly implemented by a hardware decoding processor, or executed by a combination of hardware and software modules in the decoding processor. The software module may be located in a storage medium, and the storage medium is located in the third memory 1503. The third processor 1502 reads the information in the third memory 1503 and performs the steps of the aforementioned method in combination with its hardware.

In an exemplary embodiment, the fourth function 1500 may be implemented by one or more ASICs, DSPs, PLDs, CPLDs, FPGAs, general processors, controllers, MCUs, microprocessors, or other electronic components for performing the foregoing methods.

It can be understood that the memory (the first memory 1303, the second memory 1403, and the third memory 1503) in the embodiments of the present disclosure can be a volatile memory or a non-volatile memory, and can also include both the volatile and non-volatile memories. The non-volatile memory can be a read-only memory (ROM), a programmable read-only memory (PROM), an erasable programmable read-only memory (EPROM), an electrically erasable programmable read-only memory (EEPROM), a ferromagnetic random access memory (FRAM), a flash Memory, a magnetic surface memory, an optical disk, or a compact disc (Compact Disc Read-Only Memory, CD-ROM). The magnetic surface memory can be a magnetic disk memory or a magnetic tape memory. The volatile memory may be random access memory (RAM), which is used as an external cache. By way of illustration, but not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), Direct Rambus Random Access Memory (DRRAM). Memories described in embodiments of the present disclosure are intended to include, but are not limited to, these and any other suitable types of memory.

In order to implement the method provided by the embodiment of the present disclosure, embodiments of the present disclosure also provide an information transmission system. As shown in FIG. 16, the system includes: a first function 1601, a third function 1602 and a fourth function 1603.

It should be noted that the specific processing procedures of the first function 1601, the third function 1602 and the fourth function 1603 have been described in detail above and will not be described again here.

In an exemplary embodiment, embodiments of the present disclosure also provide a storage medium, i.e., a computer storage medium, specifically a computer-readable storage medium. For example, the storage medium includes a first memory 1303 that stores a computer program. The computer program can be executed by the first processor 1302 of the first function 1300 to perform the steps described in the aforementioned first function side method. For example, the storage medium includes a second memory 1403 that stores a computer program. The computer program can be executed by the second processor 1402 of the third function 1400 to perform the steps described in the third function side method. For example, the storage medium includes a third memory 1503 that stores a computer program. The computer program can be executed by the third processor 1502 of the fourth function 1500 to perform the steps described in the fourth function side method. The computer-readable storage medium may be memory such as a FRAM, a ROM, a PROM, an EPROM, an EEPROM, a Flash Memory, a magnetic surface memory, an optical disk, or a CD-ROM.

It should be noted that terms "first", "second", etc. are used to distinguish similar objects and are not necessarily used to describe a specific order or sequence.

In addition, the technical solutions described in the embodiments of the present disclosure may be combined arbitrarily as long as there is no conflict.

The above descriptions are only preferred embodiments of the present disclosure and are not intended to limit the scope of the present disclosure.

## Claims

1. An information transmission method, comprising:
obtaining first information by a first function, wherein the first information comprises at least one of:
an identifier of a packet set;
a quality of service (QoS) requirement; or
second information, wherein the second information represents an association relationship of the packet set.

2. The method according to claim 1, wherein the second information comprises at least one of:
the association relationship of the packet set; or
an identifier of the association relationship of the packet set.

3. The method according to claim 1, wherein obtaining the first information by the first function comprises:
obtaining the first information from a second function by the first function.

4. The method according to any one of claims 1 to 3, further comprising:
determining a network policy of the packet set based on the first information by the first function.

5. The method according to claim 4, wherein the network policy of the packet set comprises at least one of:
a QoS policy of the packet set; or
discarding a specified packet set based on the association relationship of the packet set.

6. The method according to claim 5, wherein the QoS policy of the packet set comprises at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

7. The method of claim 4, further comprising:
sending the network policy of the packet set to a third function by the first function.

8. An information transmission method, comprising:
receiving a network policy of a packet set from a first function by a third function.

9. The method according to claim 8, wherein the network policy of the packet set comprises at least one of:
a QoS policy of the packet set; or
discarding a specified packet set based on an association relationship of the packet set.

10. The method according to claim 9, wherein the QoS policy of the packet set comprises at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

11. The method according to any one of claims 8 to 10, further comprising:
sending the network policy of the packet set to a fourth function by the third function.

12. The method of claim 11, wherein the fourth function comprises at least one of:
a radio access network (RAN);
a user plane function (UPF); or
a base station.

13. The method according to any one of claims 8 to 10, further comprising:
sending third information to a terminal by the third function, wherein the third information comprises at least one of:
a QoS policy of the packet set;
an identifiers of the packet set; or
second information, wherein the second information represents an association relationship of the packet set.

14. The method of claim 13, wherein the second information comprises at least one of:
the association relationship of the packet set; or
an identifier of the association relationship of the packet set.

15. An information transmission method, comprising:
receiving a network policy of a packet set from a third function by a fourth function; and
processing a service flow according to the network policy of the packet set by the fourth function.

16. The method according to claim 15, wherein the network policy of the packet set comprises at least one of:
a QoS policy of the packet set; or
discarding a specified packet set based on an association relationship of the packet set.

17. The method according to claim 16, wherein the QoS policy of the packet set comprises at least one of:
a fifth generation mobile communication technology QoS identifier (5QI);
an allocation and retention priority (ARP);
a reflective QoS attribute (RQA);
a guaranteed flow bit rate (GFBR);
a maximum flow bit rate (MFBR);
a notification control; or
a maximum packet loss rate of an uplink (UL) and a downlink (DL).

18. The method of claim 15, wherein the fourth function comprises at least one of:
a radio access network (RAN);
a user plane function (UPF); or
a base station.

19. The method according to any one of claims 15 to 18, wherein processing the service flow according to the network policy of the packet set by the fourth function comprising:
obtaining a data packet of the service flow, wherein the data packet comprises an identifier of the packet set and/or an identifier of an association relationship of the packet set;
performing at least one of following processing on the data packet based on the identifier of the packet set and/or the identifier of the association relationship of the packet set, and the network policy of the packet set:
QoS guarantee;
priority guarantee;
processing of packet sets having the association relationship.

20. The method according to claim 19, wherein the identifier of the packet set and/or the identifier of the association relationship of the packet set is set in a header of the data packet.

21. An information transmission apparatus, configured in a first function, comprising:
an obtaining unit, configured to obtain first information, wherein the first information comprises at least one of:
an identifier of a packet set;
a quality of service (QoS) requirement; or
second information, wherein the second information represents an association relationship of the packet set.

22. An information transmission apparatus, configured in a third function, comprising:
a first receiving unit, configured to receive a network policy of a packet set sent by a first function.

23. An information transmission apparatus, configured in a fourth function, comprising:
a second receiving unit, configured to receive a network policy of a packet set sent by a third function; and
a first processing unit, configured to process a service flow according to the network policy of the packet set.

24. A first function, comprising: a first communication interface and a first processor; wherein,
the first processor is configured to obtain first information through the first communication interface, wherein the first information comprises at least one of:
an identifier of a packet set;
a quality of service (QoS) requirement; or
second information, wherein the second information represents an association relationship of the packet set.

25. A third function, comprising: a second communication interface and a second processor; wherein,
the second communication interface is configured to receive a network policy of a packet set sent by a first function.

26. A fourth function, comprising: a third communication interface and a third processor; wherein,
the third communication interface is configured to receive a network policy of a packet set sent by a third function; and
the third processor is configured to process a service flow according to the network policy of the packet set.

27. A first function comprising: a first processor and a first memory for storing a computer program capable of running on the first processor,
wherein, the first processor is configured to perform the steps of the method according to any one of claims 1 to 7 when running the computer program.

28. A third function comprising: a second processor and a second memory for storing a computer program capable of running on the second processor,
wherein, the second processor is configured to perform the steps of the method according to any one of claims 8 to 14 when running the computer program.

29. A fourth function comprising: a third processor and a third memory for storing a computer program capable of running on the processor,
wherein, the third processor is configured to perform the steps of the method according to any one of claims 15 to 20 when running the computer program.

30. A storage medium having a computer program stored thereon that, when executed by a processor, the steps of the method according to any one of claims 1 to 7, or the steps of the method according to any one of claims 8 to 14, or the steps of the method according to any one of claims 15 to 20 are performed.
